# EUROPÄISCHE PATENTANMELDUNG

(11) **EP 2 884 237 A1**
(43) Veröffentlichungstag der Anmeldung: **17.06.2015**
(21) Anmeldenummer: 14197733.0
(22) Anmeldetag: 12.12.2014
(51) Int. Cl.: G01D 5/20

(54) **Induktiver Drehwinkelsensor**

(30) Priorität: 13.12.2013 DE 102013225874
(71) Anmelder: Continental Teves AG & Co. oHG, 60488 Frankfurt (DE)
(72) Erfinder: Schirling, Andreas, 64285 Darmstadt (DE); Stählin, Ulrich, 65760 Eschborn (DE)

(57) **Zusammenfassung**

Drehwinkelsensor (2) zum Erfassen des Drehwinkels eines rotierenden Elements, insbesondere Rotor eines elektrischen Motors, aufweisend:
- eine Erregerspule (20, 120), welche mit einer Wechselspannung (U~) versorgt wird, um ein zur Wechselspannung (U~) korrespondierendes Erregerfeld zu erzeugen,
- mindestens zwei Empfangsspulen (40a, 40b, 140a, 140b), die mit der Erregerspule (30, 130) derart gekoppelt sind, so dass das Erregerfeld in den Empfangsspulen (40a, 40b, 140a, 140b)jeweils eine Spannung induziert, und
- eine Winkelgebereinheit (30, 130, 230, 330), das mit dem rotierenden Element verbunden ist und mittels dessen die Induktivität der Empfangsspulen (40a, 40b, 140a, 140b) beeinflussbar ist,

dadurch gekennzeichnet, dass jede Empfangsspule (40a, 40b, 140a, 140b) mehrere durch einen Wicklungsabschnitt eingegrenzte Messfelder (M1, M1', M2, M2') aufweist, die im Wesentlichen kreisförmig umlaufend angeordnet sind.

## Beschreibung

Die Erfindung betrifft einen Drehwinkelsensor zum Erfassen des Drehwinkels eines rotierenden Elements gemäß dem Oberbegriff des Anspruchs 1 sowie einen elektrischen Motor mit einem erfindungsgemäßen Drehwinkelsensor nach Anspruch 14.

Aus der EP 1 828 722 B1 ist ein induktiver Positionsdetektor mit einer ersten induktiven Einrichtung und einer zweiten induktiven Einrichtung bekannt, wobei die erste induktive Einrichtung einen passiven Resonanzkreis umfasst und die zweite induktive Einrichtung die Messstrecke definiert und mindestens zwei Empfangswindungen umfasst. Die zweite induktive Einrichtung ist so konfiguriert, dass sie im Gebrauch einen Wechselstrom in dem passiven Resonanzkreis induziert, sodass der in dem passiven Resonanzkreis induzierte Wechselstrom infolge der gegenseitigen Induktivität zwischen den Empfangswindungen und dem passiven Resonanzkreis ein Wechselsignal in jeder Empfangswindung induziert, wobei diese Signale bezeichnend sind für die Position der ersten induktiven Einrichtung auf der Messstrecke. Aus dieser Druckschrift ist es zwar bekannt, dass Prinzip des Positionsdetektors im Allgemeinen zur Messung eines Drehwinkel anzuwenden. Es wird jedoch nicht offenbart, wie eine solche Ausführungsform konkret aussehen könnte.

Davon ausgehend liegt der Erfindung die Aufgabe zu Grunde, einen Drehwinkelsensor zum erfassen des Drehwinkel eines rotierenden Elements aufzuzeigen, der vorzugsweise kostengünstig herstellbar ist.

Die Aufgabe wird durch die Merkmale der unabhängigen Ansprüche gelöst. Bevorzugte Ausführungsformen sind Gegenstand der abhängigen Ansprüche.

Die Erfindung basiert auf den Grundgedanken, den Messbereich mittels der Messfelder in einer kreisförmigen Form zu definieren, so dass bei einer Drehung der Winkelgebereinheit entlang der Messfelder der jeweilige Winkel des rotierenden Elements mittels der induzierten Spannung an der Empfangsspule ermittelt werden kann. Vorteilhaft ist es mehrere Empfangsspulen zu verwenden. In der nachfolgenden Beschreibung wird daher auf mehrere Empfangsspulen Bezug genommen.

Die Winkelgebereinheit ist hierzu mit dem rotierenden Element verbindbar, so dass es die Rotation des rotierenden Elements wiederspiegeln kann. Die mittels der Wicklungseinheiten definierten Messfelder sind derart ausgebildet, dass die Ausgangsspannungen an den Empfangsspulen ohne die Winkelgebereinheit gleich Null sind. Sobald sich die Winkelgebereinheit über eines der Messfelder oder mehreren Messfelder befindet ändert sich die Ausgangsspannung der Empfangsspulen, so dass je nach Wert der Ausgangsspannung die relative Position der Winkelgebereinheit zu den Messfeldern ermittelbar ist und der Drehwinkel des rotierenden Elements ermittelt werden kann.

Die kreisförmige Anordnung der Messfelder hat den Vorteil, dass die Messfelder einen inneren Bereich einschließen, der nicht zur Messung des Drehwinkels notwendig ist. Dieser Bereich kann dann zum Durchführen des rotierenden Elements, bspw. eine Welle, durch die Winkelgebereinheit genutzt werden. Die von den Entwicklungsabschnitten eingegrenzten Messfelder definieren im Wesentlichen einen umschlossenen Bereich, wobei der Bereich für den Anfangs- und Endpunkt der Entwicklung eine kleine offene Stelle aufweisen kann.

### [Weitere Bevorzugte Ausführungsformen]

Eine vorteilhafte Ausführungsform des erfindungsgemäßen Drehwinkelsensors ist derart ausgebildet, dass die Messfelder um einen gemeinsamen Punkt umlaufend gleichmäßig zueinander beabstandet angeordnet sind. Der Messbereich von 360° kann auf diese Weise effizient abgedeckt werden.

Eine vorteilhafte Ausführungsform des erfindungsgemäßen Drehwinkelsensors ist derart ausgebildet, dass jeweils zwei Messfelder paarweise diametral zueinander gegenüberliegend angeordnet sind, um auf diese Weise die Signalgüte zu verbessern.

Eine vorteilhafte Ausführungsform des erfindungsgemäßen Drehwinkelsensors ist derart ausgebildet, dass die Messfelder eine zu den unmittelbar benachbarten Messfeldern entgegengesetzt Wicklungsrichtung aufweisen, so dass die unmittelbar benachbarten Messfelder voneinander unterschieden werden können.

Eine vorteilhafte Ausführungsform des erfindungsgemäßen Drehwinkelsensors ist derart ausgebildet, dass jede Empfangsspule m=2*n, vorzugsweise 4 oder 8, Messfelder aufweisen, wobei n eine gerade Zahl ist. Dies ermöglicht eine besonders gute Anpassbarkeit der Empfangsspulen an gängige elektrische Motoren.

Eine vorteilhafte Ausführungsform des erfindungsgemäßen Drehwinkelsensors ist derart ausgebildet, dass die diametral gegengenüberliegenden Messfelder der einen Empfangsspule um 45° winkelversetzt zu zwei diametral gegenüberliegenden Messfeldern der anderen Empfangsspule angeordnet sind. Diese Ausführungsform ermöglicht eine besonders kostengünstige Bauweise der Empfangsspulen.

Eine vorteilhafte Ausführungsform des erfindungsgemäßen Drehwinkelsensors ist derart ausgebildet, dass die diametral gegengenüberliegenden Messfelder der einen Empfangsspule um 30° winkelversetzt zu zwei diametral gegenüberliegenden Messfeldern der anderen Empfangsspule angeordnet sind. Diese Ausführungsform ermöglicht eine kostengünstige Bauweise der Empfangsspulen eine präzisere Messung des Drehwinkels.

Eine vorteilhafte Ausführungsform des erfindungsgemäßen Drehwinkelsensors ist derart ausgebildet, dass die Winkelgebereinheit ein elektrisches Leitelement zum erzeugen eines Wirbelstroms aufweist.

Eine vorteilhafte Ausführungsform des erfindungsgemäßen Drehwinkelsensors ist derart ausgebildet, dass die Winkelgebereinheit einen elektromagnetischen Schwingkreis mit mindestens einem kapazitiven und mindestens einem induktiven Element aufweist. Der Schwingkreis ist vorzugsweise ein passiver Schwingkreis. Die Signalgüte der Ausgangsspannung an den Empfangsspulen lässt sich auf diese Weise verbessern.

Eine vorteilhafte Ausführungsform des erfindungsgemäßen Drehwinkelsensors ist derart ausgebildet, dass die Winkelgebereinheit eine Vielzahl von Schwingkreisen aufweist. Zum einen erhöht die Redundanz an Schwingkreisen die Ausfallsicherheit der Winkelgebereinheit. Des Weiteren kann auf diese Weise der Drehwinkel noch präziser ermittelt werden.

Eine vorteilhafte Ausführungsform des erfindungsgemäßen Drehwinkelsensors ist derart ausgebildet, dass jeder Schwingkreis eine eigene Eigenfrequenz aufweist. Mittels dieser Ausführungsform können die einzelnen Schwingkreise voneinander unterschieden werden, so dass es möglich ist die Position einzelner Schwingkreise innerhalb des Messbereichs festzustellen. Im einfachsten Fall weisen alle Schwingkreise dieselbe Eigenfrequenz auf.

Eine vorteilhafte Ausführungsform des erfindungsgemäßen Drehwinkelsensors ist derart ausgebildet, dass die Wechselspannung eine Spannungsfrequenz aufweist, wobei die Spannungsfrequenz variabel einstellbar ist. Auf diese Weise kann die Erregerfrequenz genau auf die Eigenfrequenz der Schwingkreise eingestellt werden.

Eine vorteilhafte Ausführungsform des erfindungsgemäßen Drehwinkelsensors ist derart ausgebildet, dass die Wechselspannung abwechselnd in unterschiedliche Frequenzen einstellbar ist. Mittels dieser Ausführungsform ist es möglich mit einer Spannungsquelle gleichzeitig mehrere passive Schwingkreise mit unterschiedlichen Eigenfrequenzen zu betreiben.

Eine vorteilhafte Ausführungsform des erfindungsgemäßen Drehwinkelsensors ist derart ausgebildet, dass die Spannungsfrequenz mittels Addition mehrerer Wechselspannungen einstellbar ist. Diese Ausführungsform ermöglicht einen einfachen Aufbau zur Erzeugung unterschiedlicher Spannungsfrequenzen, insbesondere auf die jeweiligen Eigenfrequenzen der Stromkreis sehr angepasst sind.

Eine vorteilhafte Ausführungsform des erfindungsgemäßen Drehwinkelsensors ist derart ausgebildet, dass die Spannungsfrequenz in Abhängigkeit der Eigenfrequenz der Schwingkreise eingestellt wird oder die Eigenfrequenz in Abhängigkeit der unterschiedlich einstellbaren Spannungsfrequenzen festgelegt wird.

Eine vorteilhafte Ausführungsform des erfindungsgemäßen Drehwinkelsensors ist derart ausgebildet, dass das kapazitive Element ein Kondensator und / oder das induktive Element ein Stromleiter ist.

Eine vorteilhafte Ausführungsform des erfindungsgemäßen Drehwinkelsensors ist derart ausgebildet, dass die Winkelgebereinheit einen Trägerkörper aufweist und die Schwingkreise gleichmäßig um einen Rotationspunkt herum angeordnet sind. Die Ausführungsform erlaubt eine besonders präzise Messung des Drehwinkels.

Eine vorteilhafte Ausführungsform des erfindungsgemäßen Drehwinkelsensors ist derart ausgebildet, dass der Schwingkreis oder die Schwingkreise innerhalb eines ringförmigen Bereichs des Trägerkörpers angeordnet sind. Die Ausführungsform ist besonders für den Einsatz des Drehwinkelsensors im Zusammenhang mit einer rotierenden Welle geeignet.

Eine vorteilhafte Ausführungsform des erfindungsgemäßen Drehwinkelsensors ist derart ausgebildet, dass die Winkelgebereinheit oder der Schwingkreis im Wesentlichen derart dimensioniert ist, dass es zwei diametral gegenüberliegende Messfelder abdecken kann. Diese Ausführungsform ermöglicht trotz der einfachen Geometrie der Winkelgebereinheit einen hohe Signalgüte der Ausgangsspannung an den Empfangsspulen.

Eine vorteilhafte Ausführungsform des erfindungsgemäßen Drehwinkelsensors ist derart ausgebildet, dass die Erregerspule eine Wicklung aufweist, die kreisförmig geformt ist und derart dimensioniert ist, dass die Empfangsspulen innerhalb der Wicklung der Erregerspule anordnenbar ist.

Eine vorteilhafte Ausführungsform des erfindungsgemäßen Drehwinkelsensors ist derart ausgebildet, dass die Messfelder eine viereckige Form aufweisen.

Die Aufgabe wird ferner gelöst mittels eines zweiten Aspektes der Erfindung betreffend einen elektrischen Motor mit einem Drehwinkelsensor nach einem der vorstehenden Ausführungsformen, wobei der Motor einen Rotor mit einem Hohlwellenelement aufweist, auf dem die Erregerspule und die Empfangsspulen angeordnet sind, und wobei die Winkelgebereinheit auf dem Rotor angeordnet ist.

Vorzugsweise handelt es sich bei dem Motor um einen bürstenlosen Gleichstrommotor. Der Drehwinkelsensor eignet sich besonders gut zur Verwendung im Zusammenhang mit einem Gleichstrommotor.

Die Erfindung wird anhand eines Ausführungsbeispiels näher beschrieben. Es zeigen:
- Fig. 1: eine schematische Schaltungsanordnung mit einem ersten Ausführungsbeispiel des erfindungsgemäßen Drehwinkelsensors,
- Fig. 2: eine schematische Darstellung der Erreger- und Empfangsspulen des ersten Ausführungsbeispiels,
- Fig. 3a: eine schematische Darstellung eines ersten Ausführungsbeispiels der Winkelgebereinheit,
- Fig. 3b: eine schematische Darstellung des ersten Ausführungsbeispiels der Wickelgebereinheit mit dem ersten Ausführungsbeispiel der Erreger-und Empfangsspulen,
- Fig. 4: eine schematische Darstellung eines zweiten Ausführungsbeispiels der Winkelgebereinheit, und
- Fig. 5: eine schematische Darstellung eines dritten Ausführungsbeispiels der Wickelgebereinheit.

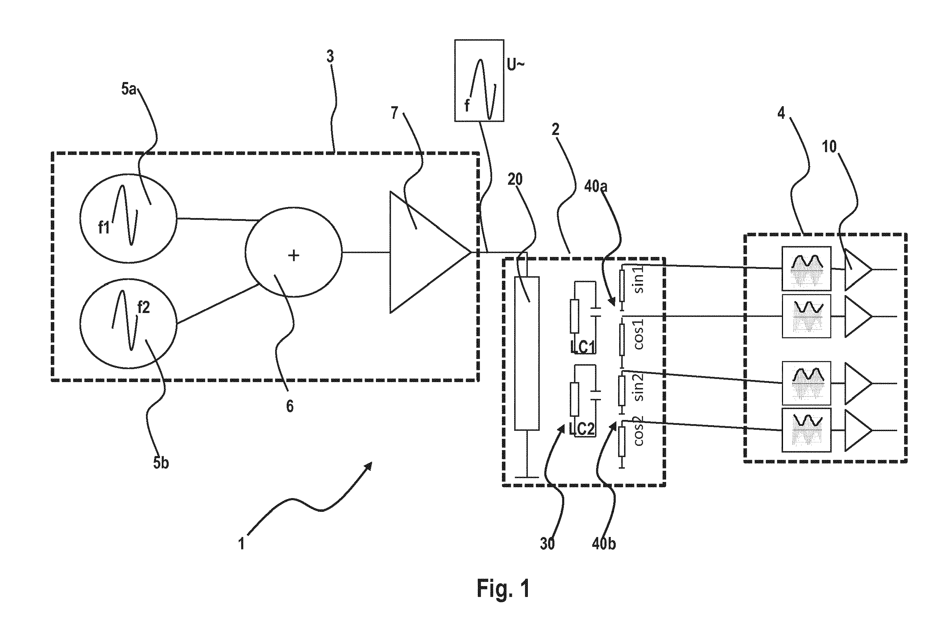

Figur 1 zeigt eine Schaltungsanordnung 1 mit einem ersten Ausführungsbeispiel des erfindungsgemäßen Drehwinkelsensors 2 in einer schematischen Darstellung. Die Schaltungsanordnung weist eine Spannungsquelle 3, den Drehwinkelsensor 2 sowie eine Auswerteeinheit 4 auf. Die Anordnung kann beispielsweise in einem elektrischen Motor, z. B. Gleichstrommotor, eingebaut sein.

Die Spannungsquelle 3 ist mit der Erregerspule 20 elektrisch verbunden und versorgt diese mit einer Wechselspannung U∼ zum erzeugen eines zur Wechselspannung U∼ korrespondierenden Erregerfeldes. Die Wechselspannung U∼ weist eine Spannungsfrequenz auf f, die variabel einstellbar ist und in unterschiedliche Spannungsfrequenzen bzw. Frequenzen einstellbar ist. Die Wechselspannung kann beispielsweise abwechselnd in unterschiedliche Frequenzen eingestellt werden. Dies kann derart erfolgen, dass die Spannungsfrequenz mittels Addition mehrerer Spannungsfrequenzen f1, f2 eingestellt wird. Hierzu weist die Spannungsquelle 3 zunächst zwei Wechselspannungserzeuger 5a und 5b auf, die jeweils eine Wechselspannung in unterschiedlichen Frequenzen f1, f2 erzeugen. Diese Ausgestaltung hat den Vorteil, dass die Wechselspannung U∼ leicht durch Variierung der Summenteile veränderbar ist. Die Ausgangssignale der Spannungserzeuger 5a und 5b werden einem Addierer 6 zugeführt. Die Summe der Ausgangssignale werden einer Treibereinheit 7 zugeführt, der aus diesem Signal die Wechselspannung U∼ erzeugt und diese der Erregerspule 20 zuführt. Es ist jedoch auch denkbar andere bereits bekannte Lösungen zur Erzeugung einer Wechselspannung in unterschiedlichen Frequenzen zu verwenden.

Der Drehwinkelsensor 2 umfasst im Wesentlichen die Erregerspule 20, eine Winkelgebereinheit 30 und zwei Empfangsspulen 40a, 40b. In Figur 1 ist die Anordnung der Erregerspule 20, der Winkelgebereinheit 30 und der Empfangsspulen 40a, 40b jeweils nur schematisch dargestellt. In einer bevorzugten Anordnung sind die Empfangsspulen 40a, 40b und die Erregerspule 20 auf einem Trägerkörper angeordnet und die Winkelgebereinheit 30 parallel benachbart zu den Spulen 30, 40a, 40b bzw. Trägerkörper angeordnet.

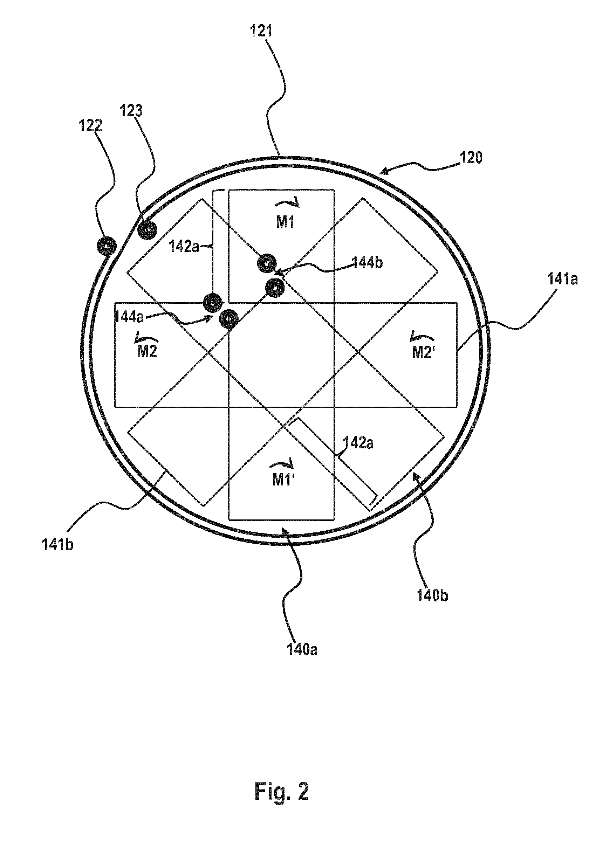

Die Erregerspule 20 ist, wie in Figur 2 gezeigt, vorzugsweise als eine auf einer Leiterplatine aufgedruckte Leiterbahn ausgebildet und um die Empfangsspulen 40a, 40b herum angeordnet, so dass das durch die Wechselspannung erzeugte Erregerfeld eine Spannung in den Empfangsspulen 40a, 40b induziert.

Die zwei Empfangsspulen 40a, 40b (es können auch mehr sein) sind hierzu mit der Erregerspule 20 induktiv gekoppelt, so dass das Erregerfeld in den Empfangsspulen 40a, 40b jeweils eine Ausgangsspannung induziert. Die Empfangsspulen 40a, 40b weisen mehrere Messfelder auf, - M1, M1', M2, M2', vgl. Figur 2 - die periodisch und in eines von zwei Wicklungsrichtungen gewickelt sind und dadurch jeweils eine sinus- und eine kosinusförmige Spannung sin1, cos1, sin2, cos2 erzeugen. Bezogen auf das Ausführungsbeispiel in Figur 2 sind die Felder M1, M1' in Uhrzeigersinn gewickelt und erzeugen eine sinusförmige Spannung, wogegen die Messfelder M2, M2' in Gegenuhrzeigersinn gewickelt sind und eine kosinusförmige Spannung erzeugen. Ohne Einfluss der Winkelgebereinheit 30 würden sich die Spannungen gegenseitig aufheben bzw. eine konstante Ausgangsspannung ergeben.

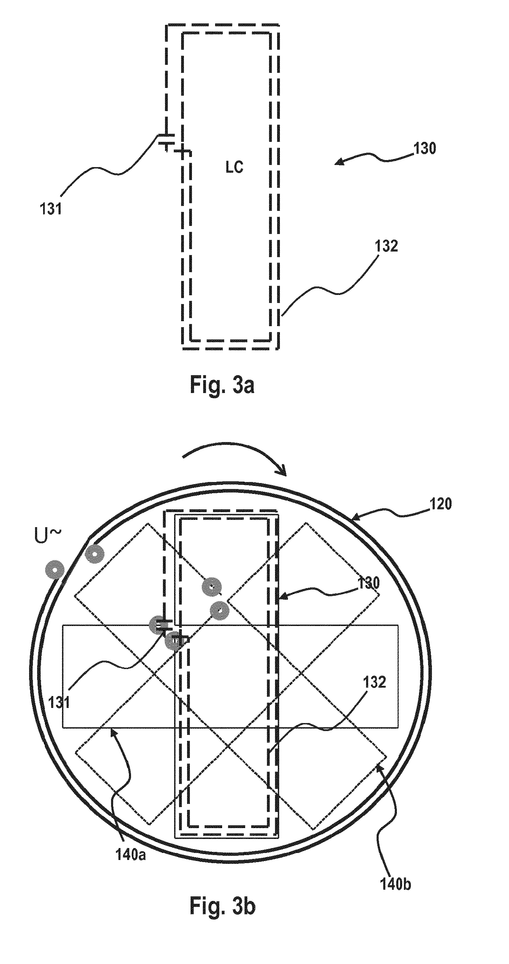

Die Winkelgebereinheit 30 ist mit einem rotierenden Element verbunden und verändert ihre relative Position zu den Empfangsspulen 40a, 40b durch die Bewegung des rotierenden Elements. Sobald sich die Fläche der Winkelgebereinheit 30 und der Empfangsspulen 40a, 40b überdecken (vgl. Figur 3b), wird die Induktivität der Empfangsspulen 40a, 40b beeinflusst und auf diese Weise die Ausgangsspannungen der Empfangsspulen 40a, 40b verändert. Die Winkelgebereinheit ist parallel zu den Empfangsspulen 40a, 40b benachbart angeordnet, wobei der Abstand so groß ist, dass eine Berührung zwischen den beiden Teilen nicht stattfindet. Die Erregerspule 20 und die Empfangsspulen 40a, 40b sind vorzugsweise auf einer Leiterplatine mittels aufgedruckten Leiterbahnen ausgebildet. In den Figuren 2 und 3b ist der Verlauf der Leiterbahnen schematisch dargestellt.

Die Auswerteeinheit 4 ist mit den Empfangsspulen 40a, 40b verbunden und wertet die Ausgangsspannungen der Empfangsspulen 40a, 40b aus. Die Ausgangsspannungen der Empfangsspulen 40a, 40b werden mittels Demodulatoren 10 verarbeitet. Als Ausgangssignal wird in der Regel ein sinus- oder kosinusförmiger Spannungsverlauf ausgegeben. Die Amplitude und Frequenz der Ausgangsspannungen gibt zumindest Ausschluss über die relative Winkelposition der Winkelgebereinheit 30 bzw. des rotierenden Elements.

Ein erstes Ausführungsbeispiel der Erreger- 120 und Empfangsspulen 140a, 140b wird anhand der Figur 2 näher beschrieben.

Figur 2 zeigt eine Erregerspule 120 mit einer Wicklung 121, die einen kreisförmigen Verlauf aufweist. Die Wicklung 121 ist über zwei Bahnen gewickelt, wobei der ein Anschlusspunkt 122 Außen angeordnet ist und der zweite Anschlusspunkt 123 Innen angeordnet ist. Die Erregerspule 120 ist über die Anschlusspunkte 122, 123 mit der Spannungsquelle 3 verbunden. Der Radius der Erregerspule 120 ist derart bemessen, dass die Empfangsspulen 140a und 140b innerhalb der Erregerspule 120 angeordnet werden können und auf diese Weise durch das Erregerfeld induktiv gekoppelt werden können.

In Figur 2 sind zwei kreuzförmige Empfangsspulen 140a, 140b dargestellt, die um 45° versetzt zueinander angeordnet sind. Zur besseren Unterscheidung ist die erste Empfangsspule 140a mit einer durchgezogenen Linie und die zweite Empfangsspule 140b in gestrichelten Linien dargestellt. Denkbar wäre auch eine Ausführung mit drei Empfangsspulen, die um 30° zueinander um versetzt sind. Die Empfangsspulen 140a, 140b können in unterschiedlichen Ebenen einer Leiterplatine aufgedruckt sein. Vorteilhaft ist eine Ausführungsform, bei der einzelne Wicklungsabschnitte 142a, 142b abwechselnd in auf zwei Ebenen verteilt angeordnet sind, bspw. auf der Vorder- und Rückseite einer Leiterplatine.

Die Empfangsspulen 140a und 140b weisen eine Wicklung 141a, 141b auf, die in Wicklungsabschnitten unterteilt ist, in Figur 2 , exemplarisch mit 142a, 142b bezeichnet. Hier verlaufen die Wicklungsabschnitte 142a, 142b gradlinig. Mehrere Wicklungsabschnitte 142a, 142b grenzen die Messfelder M1, M1', M2, M2'; N1, N1', N2, N2' ein bzw. die Messfelder werden durch den Verlauf der Wicklungsabschnitte 142a, 142b definiert. In diesem Ausführungsbeispiel sind die Wicklungsabschnitte 142a, 142b derart angeordnet, dass vier viereckige Messfelder M1, M1', M2, M2'; N1, N1', N2, N2' kreuzförmig zueinander angeordnet sind. Dabei sind jeweils zwei Messfelder, bspw. M1, M1', paarweise diametral zueinander gegenüberliegend angeordnet und auch gleichsinnig gewickelt. Die Wicklungsrichtung der Messfelder M1, M1', M2, M2'; N1, N1', N2, N2' ist durch die Pfeile innerhalb der Messfelder angedeutet. Die Wicklungsrichtung ist dabei derart ausgeführt, so dass zwei unmittelbar benachbarte Messfelder, bspw. M1, M2 oder M1, M2', entgegengesetzte Wicklungsrichtungen aufweisen. Der durch die vier Messfelder eingeschlossene mittlere Bereich ist für die Messung nicht notwendig. Diese Anordnung der Messfelder bzw. dieser Verlauf der Wicklungsabschnitte 142a, 142b hat daher den Vorteil, dass ein rotierendes Element durch die Mitte durchgeführt werden kann und das Wicklungsmuster dennoch relativ einfach herstellbar ist. Jede Empfangsspulen 140a, 140b weist einen Anschluss 144a, 144b auf, über die die in den Empfangsspulen 140a, 140b erzeugten Ausgangsspannungen abgreifbar sind.

Allgemein sind auch andere Anordnungen der Messfelder denkbar, bei dem die Messfelder im Wesentlichen kreisförmig umlaufend angeordnet sind und vorzugsweise auch um einen gemeinsamen Punkt gleichmäßig zueinander beabstandet sind. Von Vorteil ist es, dass jede Empfangsspule 2*n Messfelder aufweist, wobei n eine gerade Zahl ist.

In den Figuren 3a, 3b, 4 und 5 sind vorteilhafte Ausführungsbeispiele der Winkelgebereinheit 130, 230, 330 gezeigt.

Figur 3a zeigt eine Winkelgebereinheit 130, die einen elektromagnetischen Schwingkreis LC mit einem Kondensator 131 und einem Stromleiter 132 als induktives Element aufweist. Der Schwingkreis LC kann mittels auf einer Leiterplatine aufgedruckten Leiterbahnen hergestellt werden. Es handelt sich hierbei um einen passiven Schwingkreis LC, der eine eigene Eigenfrequenz aufweist. Vorzugsweise beträgt die Eigenfrequenz des Schwingkreis LC der Frequenz des Erregerfeldes bzw. der Wechselspannungsfrequenz f. Der Stromleiter 132 ist vorzugsweise derart ausgebildet, dass es einen im Bereich eingegrenzt, der im wesentlichen 2 diametral zueinander gegenüberliegende Messfelder M1, M1' abdeckt, vergleiche Figur 3b. Auf diese Weise ist ein besonders genaues Ausgangssignal erfassbar, wenn die Winkelgebereinheit 130 genau zwei Messfelder überdeckt.

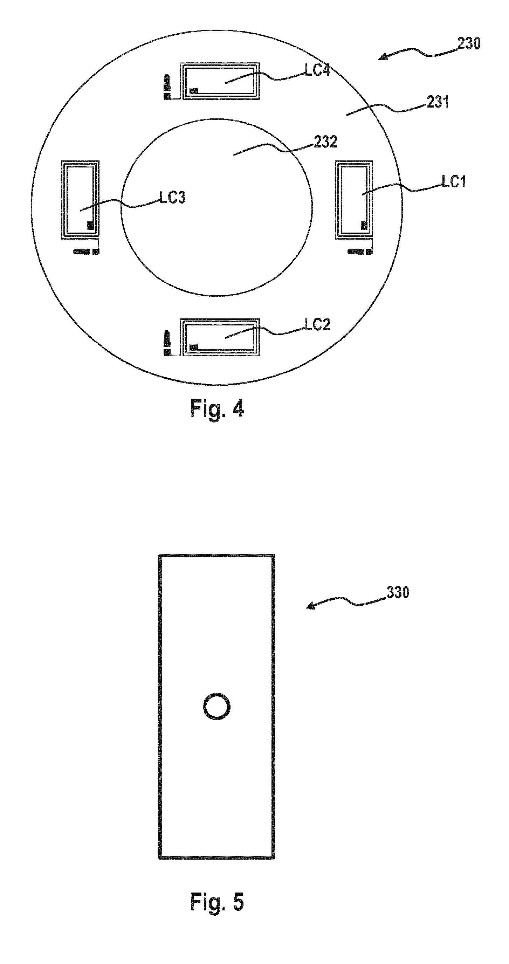

Figur 4 zeigt ein weiteres bevorzugtes Ausführungsbeispiel der Winkelgebereinheit 230. Die Winkelgebereinheit 230 weist einen Trägerkörper 231 auf, der beispielsweise als eine Leiterplatine ausgeführt sein kann. Der Trägerkörper ist ringförmig ausgebildet. Auf einer Fläche des Trägerkörpers 231 sind mehrere Schwingkreise LC1-LC4 innerhalb des ringförmigen Bereichs angeordnet. In der Mitte weist der Trägerkörper 231 eine Ausnehmung 232 auf, durch die das rotierende Element durchführbar ist. Die Schwingkreise LC1-LC2 sind im Prinzip gleichermaßen zu dem aus dem vorigen Ausführungsbeispiel ausgebildet. Vorzugsweise sind die Schwingkreise LC um den Mittelpunkt des Trägerkörper herum gleichmäßig beabstandet angeordnet. In Figur 4 sind die Schwingkreise LC jeweils um 90° versetzt zueinander angeordnet.

Besonders vorteilhaft ist es, jeden Schwingkreis derart auszulegen, dass sich die Eigenfrequenz in der Schwingkreise LC voneinander unterscheiden. Auf diese Weise ist mittels der Eigenfrequenzen jeder Schwingkreis eindeutig identifizierbar, so dass es möglich ist, die Position eines Schwingkreises relativ zu den Messfeldern festzustellen. Vorteilhafter Weise wird hierzu die Frequenz der Wechselspannung U∼ abwechselnd, bspw. nacheinander in der Reihenfolge der Schwingkreise LC1-LC4, in Abhängigkeit der Eigenfrequenz der Schwingkreise LC1-LC4 eingestellt. Alternativ kann die Eigenfrequenz in Abhängigkeit der unterschiedlich einstellbaren Wechselspannungsfrequenzen festgelegt werden.

Ein weiteres Ausführungsbeispiel, das in Figur 5 gezeigt ist, betrifft eine Winkelgebereinheit mit einem elektrischen Leiter Element zum erzeugen eines Wirbelstroms. Die Winkelgebereinheit ist im Wesentlichen viereckig ausgebildet und erstreckt sich ähnlich wie das erste Ausführungsbeispiel der Winkelgebereinheit über 2 diametral zueinander gegenüberliegenden Messfeldern M1, M1'.

Die Erfindung ist nicht auf die vorgenannten Ausführungsbeispiele beschränkt. Es ist beispielsweise möglich, den Drehwinkelsensor mit einer einfachen Schaltungsanordnung zu verwenden, die mit einer einzigen Wechselspannungsfrequenz betrieben wird. Des Weiteren ist die Auswerteeinheit 4 nicht auf das oben genannte Ausführungsbeispiel beschränkt, sondern kann durch weitere Auswerteelektronik ergänzt werden. Ferner können die Ausführungsbeispiele in einer einfachen Ausführung auch mit einer Wechselspannung in einer Frequenz realisiert werden.

## Patentansprüche

1. Drehwinkelsensor (2) zum Erfassen des Drehwinkels eines rotierenden Elements, insbesondere Rotor eines elektrischen Motors, aufweisend:
- eine Erregerspule (20, 120), welche mit einer Wechselspannung (U∼) versorgt wird, um ein zur Wechselspannung (U∼) korrespondierendes Erregerfeld zu erzeugen,
- mindestens eine, vorzugsweise zwei, Empfangsspule, (40a, 40b, 140a, 140b), die mit der Erregerspule (30, 130) derart gekoppelt sind, so dass das Erregerfeld in den Empfangsspulen (40a, 40b, 140a, 140b)jeweils eine Spannung induziert, und
- eine Winkelgebereinheit (30, 130, 230, 330), das mit dem rotierenden Element verbindbar ist und mittels dessen die Spannung der Empfangsspule (40a, 40b, 140a, 140b) beeinflussbar ist,
**dadurch gekennzeichnet, dass** die Empfangsspule (40a, 40b, 140a, 140b) mehrere durch einen Wicklungsabschnitt eingegrenzte Messfelder (M1, M1', M2, M2') aufweist, die im Wesentlichen kreisförmig umlaufend angeordnet sind.

2. Drehwinkelsensor nach Anspruch 1, **dadurch gekennzeichnet, dass** die Messfelder (M1, M1', M2, M2') um einen gemeinsamen Punkt umlaufend gleichmäßig zueinander beabstandet angeordnet sind.

3. Drehwinkelsensor nach Anspruch 1 oder 2, **dadurch gekennzeichnet, dass** die Messfelder (M1, M1', M2, M2') eine zu den unmittelbar benachbarten Messfeldern entgegengesetzt Wicklungsrichtung aufweisen.

4. Drehwinkelsensor nach einem der vorstehenden Ansprüche, **dadurch gekennzeichnet, dass** die Winkelgebereinheit (330) ein elektrisches Leitelement zum erzeugen eines Wirbelstroms aufweist.

5. Drehwinkelsensor nach einem der vorstehenden Ansprüche, **dadurch gekennzeichnet, dass** die Winkelgebereinheit (30, 130, 230) einen elektromagnetischen Schwingkreis (LC, LC1-LC4) mit mindestens einem kapazitiven und mindestens einem induktiven Element aufweist.

6. Drehwinkelsensor nach einem der vorstehenden Ansprüche, **dadurch gekennzeichnet, dass** die Winkelgebereinheit (30, 230) eine Vielzahl von Schwingkreisen aufweist.

7. Drehwinkelsensor nach Anspruch 6, **dadurch gekennzeichnet, dass** jeder Schwingkreis eine eigene Eigenfrequenz aufweist.

8. Drehwinkelsensor nach einem der vorstehenden Ansprüche, **dadurch gekennzeichnet, dass** die Wechselspannung (U∼) eine Spannungsfrequenz (f) aufweist, wobei die Spannungsfrequenz (f) in variabel einstellbar ist.

9. Drehwinkelsensor nach Anspruch 8, **dadurch gekennzeichnet, dass** die Wechselspannung (U∼) abwechselnd in unterschiedliche Spannungsfrequenzen (f) einstellbar ist.

10. Drehwinkelsensor nach einem Anspruch 9, **dadurch gekennzeichnet, dass** die Spannungsfrequenz (f) mittels Addition mehrerer Wechselspannungen einstellbar ist.

11. Drehwinkelsensor nach einem der Ansprüche 7-10, **dadurch gekennzeichnet, dass** die Winkelgebereinheit (230) einen Trägerkörper (231) aufweist und die Schwingkreise (LC1-LC4) gleichmäßig um einen Rotationspunkt herum angeordnet sind.

12. Drehwinkelsensor nach einem der vorstehenden Ansprüche, **dadurch gekennzeichnet, dass** der Schwingkreis oder die Schwingkreise (LC1-LC4) innerhalb eines ringförmigen Bereichs des Trägerkörpers (231) angeordnet ist / sind.

13. Drehwinkelsensor nach einem der Ansprüche 1 bis 12, **dadurch gekennzeichnet, dass** die Winkelgebereinheit (330) oder der Schwingkreis (LC) im Wesentlichen derart dimensioniert ist, dass es zwei diametral gegenüberliegende Messfelder (M1, M1') abdecken kann.

14. Drehwinkelsensor nach einem der vorstehenden Ansprüche, **dadurch gekennzeichnet, dass** die Erregerspule (120) eine Wicklung (121) aufweist, die kreisförmig geformt ist und derart dimensioniert ist, dass die Empfangsspulen (140a, 140b) innerhalb der Wicklung (121) der Erregerspule (120) anordnenbar ist.

15. Elektrischer Motor mit einem Drehwinkelsensor nach einem der vorstehenden Ansprüche, wobei der Motor einen Rotor mit einem Hohlwellenelement aufweist, auf dem die Erregerspule (20, 120) und die Empfangsspulen (40a, 40b, 140a, 140b) angeordnet sind, und die Winkelgebereinheit auf dem Rotor angeordnet ist.
